# EUROPÄISCHE PATENTSCHRIFT

(11) **EP 3 292 617 B1**
(45) Veröffentlichungstag und Bekanntmachung des Hinweises auf die Patenterteilung: **08.01.2020**
(21) Anmeldenummer: 16714227.2
(22) Anmeldetag: 10.03.2016
(51) Int. Cl.: H02K 3/46

(54) **ELEKTRONISCH KOMMUTIERTER GLEICHSTROMMOTOR**
ELECTRONICALLY COMMUTATED DIRECT CURRENT MOTOR
MOTEUR À COURANT CONTINU À COMMUTATION ÉLECTRONIQUE

(30) Priorität: 04.05.2015 DE 102015208210
(43) Veröffentlichungstag der Anmeldung: 14.03.2018
(73) Patentinhaber: Bühler Motor GmbH, 90459 Nürnberg (DE)
(72) Erfinder: BRETTSCHNEIDER, Jürgen, 90482 Nürnberg (DE); CHEMNITZ, Norbert, 90455 Nürnberg (DE)
(86) Internationale Anmeldenummer: PCT/DE2016/200130
(87) Internationale Veröffentlichungsnummer: WO 2016/177366

(56) Entgegenhaltungen:
- EP-A1- 1 722 464
- EP-A2- 2 768 122
- DE-A1-102013 003 024
- JP-A- S59 222 052

## Beschreibung

Die Erfindung betrifft einen elektronisch kommutierten Gleichstrommotor mit einem Innenrotor und einem dreiphasigen Stator (1), welcher einen geschlossenen Rückschlussring (32), eine Vielzahl von mit diesem einstückigen, nach innen gerichteten Statorpolen (33) und einen Isolierstoffkörper (4) aufweist, welcher die Statorpole (33) durch Polabdeckungen (21) und den Rückschlussring (32) durch eine Rückschlussringabdeckung (19) axial bedeckt und der Isolierstoffkörper (4) aus der Rückschlussringabdeckung (19) achsparallel vorspringende Drahtführungsmittel (5) aufweist, welche durch Drahtdurchführungen (8) unterbrochen sind, wobei n Statorpole (33) vorgesehen sind und jeder Statorpol (33) mit einer Spule (S1 bis S9) bewickelt ist.

Elektronisch kommutierte Gleichstrommotoren mit nach innen gerichteten Polen werden je nach Anforderung auf unterschiedliche Weise hergestellt. Sollen kurze Prozesszeiten erreicht werden, eignet sich z. B. ein Einzelpolwickelverfahen, bei dem die Pole auf wirtschaftliche Weise in Gruppen gleichzeitig von außen bewickelt und anschließend zu einem Stator gefügt werden. Jede Grenzfläche zwischen den einzelnen Polen bildet einen magnetischen Widerstand. Die Summe dieser Widerstände verringert den Gesamtwirkungsgrad des Gleichstrommotors. Daher wird dieses Verfahren nicht bei hohen Anforderungen an den Wirkungsgrad verwendet. Hierfür wählt man besser Innenwickelverfahren, wie das Nadelwickeln. Nachteilig beim Nadelwickelverfahren ist jedoch ein relativ großer Bauraumbedarf für die Wickelnadel selbst, die sich einerseits zwischen den Polen bewegen muss und andererseits auch beim Verlegen der Wickeldrähte zwischen Drahtführungsmitteln. Weiter ist es beim Nadelwickeln, insbesondere beim Anschließen der Wickleldrähte an Anschlussmitteln je nach Anschlussart erforderlich den Wickeldraht achsparallel zu fügen oder zu verlegen, wobei der Draht axial so gesichert sein muss, dass er nicht aus bereits verlegten Abschnitten, z. B. an Umlenkgeometrien herausrutscht. Um dies zu vermeiden sind in der Regel Hinterschnitte an den Umlenkgeometrien vorgesehen. Diese Geometrien erfordern deutlich aufwändigere Spritzgusswerkzeuge mit seitlichen Schiebern.

Aus der EP 1 722 464 A1 ist ein gattungsgemäßer elektronisch kommutierter Gleichstrommotor bekannt, bei dem die Drähte außen am Isolierstoffkörper verlegt und mit einer radial an dem Isolierstoffkörper anschließenden Kontaktiervorrichtung (Anschlussblock) verbunden werden. Die Wicklung ist dabei so verlegt, dass der Wickeldraht vor oder nach der Bewicklung aller einer Phase zugeordneten Statorzähne über ein Kontaktierelement der Kontaktiervorrichtung geführt ist. Der Wickeldraht ist jeweils im Bereich des Rückschlusses außen auf dem Isolierstoffkörper verlegt. Da dies auch im Bereich der Kontaktiervorrichtung der Fall ist, erstreckt sich die Kontaktiervorrichtung sehr weit radial nach außen und vergrößert hierdurch den Bauraum erheblich.

Die JPS 59222052 A offenbart einen Stator eines elektrischen Motors für Lüftungsanlagen, bei der die Leitungsdrähte einfach positioniert, geführt und gesichert werden. Durch Beschichten des Statorkerns mit elektrisch isolierendem Harz wird eine Isolierschicht gebildet. Ein Vorsprung an der Isolierschicht des Statorkerns nimmt die Leitungsdrähte, die axial einstückig mit der Isolierschicht vorstehen, auf.

Aus der DE 10 2013 003 024 A1 ist ein Elektromotor einer Fahrzeugkomponente, insbesondere eines Fensterheber- oder Sitzverstellantriebs mit einem Rotor und mit einem Stator mit dreiphasiger Statorwicklung mit je Phase mindestens einer Spule sowie mit einem Verschaltungselement bekannt. Das Verschaltungselement weist eine Anzahl von Spulenenden entsprechende Anzahl von Kontaktdurchführungen auf und ist zweckmäßigerweise ring- oder kreisförmig ausgebildet und an den Durchmesser des Stators derart angepasst, dass es an einer Stirnseite des Stators angeordnet und dort fixiert werden kann.

Die EP 2 768 122 A2 offenbart einen bürstenlosen Gleichstrommotor mit einem Stator 240 und einem Rotor 254, die schwenkbar innerhalb des Stators 230 angeordnet sind, wobei der Stator 230 mehrere Wicklungen 232 und mehrere elektrisch leitende Anschlüsse umfasst, die an einem Umfang des Stators 240 angeordnet sind und sich im Wesentlichen parallel zur Achse erstrecken, wobei jedes Endgerät dazu eingerichtet ist, mit mindestens einer der Wicklungen 232 und mit einer Stromquelle 108 verbunden zu werden. Die Statorwicklungen 232 können in einer Dreieckskonfiguration durch elektrisches Koppeln benachbarter Anschlüsse der ersten und der zweiten Wicklung, der zweiten und der dritten Wicklung und der dritten und ersten Wicklung an drei Verbindungspunkten verbunden sein. Eine Ablenkplatte 236 ist benachbart zu dem Stator innerhalb des Motors angeordnet und enthält Metallführungen oder Stanzungen zur elektrischen Kupplung der benachbarten Anschlüsse der Wicklungen zu den Verbindungspunkten. An der Statoranordnung 230 sind Isolierkanäle 506 und Haken 516 ausgebildet, durch die die Drähte 532 verlegt werden.

Aufgabe der Erfindung ist es bei einem gattungsgemäßen Gleichstrommotor für eine kompakte Bauform mit geringen axialen und radialen Abmessungen, für einen optimalen Wirkungsgrad auch bei Verwendung eines Nadelwickelverfahrens und für eine einfache Herstellbarkeit zu sorgen.

Diese Aufgabe wird erfindungsgemäß durch die Ansprüche 1 und 16 gelöst. Da zusätzlich zumindest drei einander benachbarte Drahtumlenkmittel (7) aus der Rückschlussringabdeckung (19) achsparallel vorspringen, welche durch Freisparungen (10) voneinander getrennt sind und zumindest n Drahtdurchführungen (8) zwischen den Drahtführungsmitteln (5) untereinander oder den Drahtführungsmitteln (5) und den Drahtumlenkmitteln (7) vorgesehen sind, ergeben sich mehr Möglichkeiten den Wickeldraht (6) sinnvoll platzsparend zu verlegen. Durch die Anordnung der Freisparungen (10) gegenüber einem Anschlussblock (28) lassen sich die Wickeldrähte (6) optimal parallel zueinander verlegen und in gerader Weise dem Anschlussblock (28) zuzuführen. Drahtumlenkmittel (7) in einem radial weiter außen liegenden Bereich sind durch die vorgeschlagene Lösung nicht erforderlich. Zweckmäßigerweise ist der Isolierstoffkörper (4) mit einer radialen Erweiterung ausgebildet, welche als Träger (22) für einen Anschlussblock (28) dient. Dieser Anschlussblock (28) lässt sich je nach Einsatzfall unterschiedlich gestalten, ohne dass der Isolierstoffkörper (4) selbst angepasst werden muss. Dies erlaubt einen wirtschaftlichen Aufbau eines modularen Produktportfolios. Schneid-Klemm-Kontakte (25) eignen sich für eine einfache Montage der Anschlüsse.

Weiterbildungen der Erfindung werden in den Unteransprüchen dargestellt. Vorzugsweise werden zwei der Drahtumlenkmittel (7⁽¹⁾, 7⁽²⁾) ausschließlich für die Drahtumlenkung und nicht für die Drahtzuführung zu einer Spule (S1 bis Sₙ) verwendet. Da diese beiden Drahtumlenkmittel (7) von mehreren Seiten mit dem Wickeldraht (6) umschlungen sind, ergibt sich hieraus eine gewisse Zugentlastung für die Anschlüsse.

Weiter ist der Wickeldraht (6) am dritten Drahtumlenkmittel (7⁽³⁾) nur radial innen vorbeigeführt.

Um den Wickeldraht (6) platzsparend verlegen zu können ist vorgesehen, dass die Drahtführungsmittel (5) des Isolierstoffkörpers (4) im Bereich jedes Statorpols (33) zumindest eine radial ausgerichtete Drahtdurchführung (8) aufweisen, die dazu geeignet ist, den Wickeldraht (6) zwischen einem Raumbereich radial innerhalb des Drahtführungsmittels (5) und einem Raumbereich radial außerhalb des Drahtführungsmittels (5) aufzunehmen.

Um Wickeldraht (6) einzusparen und damit auch den Wicklungswiderstand zu minimieren ist vorgesehen, dass zumindest die beiden den Drahtumlenkmittel (7) benachbarten Drahtführungsmittel (5) Zusatzdrahtdurchführungen (2⁽¹⁾, 2⁽²⁾) aufweisen und daher in Teildrahtführungsmittel (3⁽¹⁾, 3⁽²⁾, 3⁽³⁾, 3⁽⁴⁾) getrennt sind.

In Weiterbildung der Erfindung ist vorgesehen, dass zumindest zwei Wickeldrahtabschnitte nacheinander das erste, das zweite und das dritte Drahtumlenkmittel (7⁽¹⁾, 7⁽²⁾, 7⁽³⁾) berühren. Hierbei wird der Wickeldraht (6) plastisch umgeformt, wodurch Zugkräfte im Drahtzug aufgenommen werden können. Dies ist insbesondere dann wichtig, wenn die Wickeldrahtabschnitte auf kürzestem Wege mit einer der Phasenanschlüsse P1, P2 oder P3 verbunden sind.

Eine deutlich vereinfachte Herstellbarkeit wird ermöglicht, indem die Drahtumlenkmittel (7) ohne Hinterschnitte in axialer Richtung ausgeführt sind.

Die Erfindung ermöglicht eine besonders platzsparende Anordnung des Anschlussblocks (28) in Bezug auf den Stator (1), weil beim Bewickeln der Anschlussblock (28) noch nicht montiert ist, kann die Wickelnadel ohne Axialhub geführt werden - aus diesem Grund sind auch keine Hinterschnitte an den Drahtumlenkmitteln (7) erforderlich - besteht nicht die Gefahr eines Abrutschens von Wickeldrahtabschnitten während der Wicklung. Der maximale radiale Abstand von Schneidkanten eines der Schneid-Klemm-Kontakten (25) zum radial äußeren Rand des Rückschlussrings (32) kann daher maximal das Vierfache der Breite einer Freisparung (10) betragen.

Es hat sich als vorteilhaft erwiesen, dass die Tiefe der Freisparungen (10) zumindest die vierfache Drahtdicke und zusätzlich der Dicke eines Absatzes (30) zwischen einer Drahtführungsrille (23) am Außenumfang der Drahtführungsmittel (5) und dem axialen Ende des Drahtführungsmittels (5) beträgt. Dies dient auch dazu, dass der Wickeldraht (6) außerhalb der Spulen (S1 bis Sₙ) und des Anschlussblocks (28) berührungsfrei in unterschiedlichen Ebenen verlegbar ist. Unter berührungsfrei ist dabei nicht die fertigungsbedingte zufällige Berührung zweier Drahtisolierungen zu verstehen, sondern die geometrisch eindeutig definierte Lage der Wickeldrähte (6) in Drahtführungsrillen (23), welche einen berührungsfreien Abstand der stromführenden Bestandteile des Wickeldrahts (6) gewährleisten.

Weiter ist vorgesehen, dass die Drahtführungsmittel (5) und die Drahtumlenkmittel (7) jeweils tangential in Bezug auf die Rückschlussringabdeckung (19) über den Umfang der Rückschlussringabdeckung (19) verteilt sind, wobei sowohl die Drahtdurchführungen (8) als auch die Freisparungen (10) eine lichte Weite aufweisen, welche eine Wickelnadel zum Bewickeln der Spulen (S1 bis Sₙ) und Verlegen des Wickeldrahtes (6) problemlos passieren lässt. Diese Anordnung ist besonders platzsparend und prozesssicher.

Die Erfindung eignet sich insbesondere für dreiphasige Statoren und bei denen die Wicklung als Dreieckschaltung mit jeweils mehreren Spulen (S1 bis Sₙ) in Reihe ausgeführt ist. Jede Phase ist an einem Anschlussblock (28) elektrisch angeschlossen. Dieser ist in einem Segmentbereich (29) angeordnet, wobei der Segmentbereich (29) durch zwei Statorpole (33) definiert ist.

Zwischen der Rückschlussringabdeckung (19) und dem Anschlussblock (28) ist radial außerhalb des Rückschlussrings (32) zumindest ein Drahtablenkmittel (9) angeordnet. Dieses dient dazu den Wickeldraht (6) in die korrekte Anschlussposition zu bringen.

Eine weitere Lösung der Erfindung ist durch das Verfahren gemäß Anspruch 17 gegeben. Diese Lösung umfasst folgende Verfahrensschritte:
(a) Bereitstellen eines wiederverwendbaren Anschlagmittels (13) als Teil eines Werkstückträgers, Bereitstellen eines Stators (1) mit einem Isolierstoffkörper (4), Montage des Stators (1) am Anschlagmittel (13), Einlegen dieser Anordnung in eine Wickelvorrichtung, Anschlagen eines Wickeldrahtes (6') an einem ersten Anschlagpfosten (14) des Anschlagmittels (13) und Führen des Wickeldrahtes (6') zum Stator (1) durch eine erste Drahtdurchführung (8⁽¹⁾) des Isolierstoffkörpers (4),
(b) Wickeln einer ersten Spule (S1) einer ersten Phase,
(c) Verlegung des Wickeldrahtes (6') zwischen der ersten Spule (S1) über die erste Drahtdurchführung (8⁽¹⁾) radial nach außen und über mehrere Teildrahtführungsmittel (3⁽¹⁾, 3⁽²⁾) bzw. Drahtführungsmittel (5⁽¹⁾, 5⁽²⁾) in einer ersten Drahtführungsrille (23), axial nahe am Rückschlussring (32), Umlenken des Wickeldrahtes (6') nach innen durch eine vierte Drahtdurchführung (8⁽⁴⁾) und Wickeln einer zweiten Spule (S2) der ersten Phase,
(d) Durchführung des Wickeldrahts (6') durch die vierte Drahtdurchführung (8⁽⁴⁾) radial nach außen, Verlegen um mehrere Drahtführungsmittel (5⁽³⁾, 5⁽⁴⁾,5⁽⁵⁾) und weitere Verlegung durch eine siebte Drahtdurchführung (8⁽⁷⁾) radial nach Innen und Wickeln einer dritten Spule (S3) der ersten Phase,
(e) Durchführung des Wickeldrahts (6') durch die siebte Drahtdurchführung (8⁽⁷⁾) radial nach außen und Verlegen um mehrere Drahtführungsmittel (5⁽⁶⁾) bzw. Teildrahtführungsmittel (3⁽³⁾, 3⁽⁴⁾) und um ein erstes Drahtumlenkmittel (7⁽¹⁾) herum durch eine erste Freisparung (10⁽¹⁾), um ein zweites Drahtumlenkmittel (7⁽²⁾) herum radial nach außen durch eine zweite Freisparung (10⁽²⁾) in Richtung Anschlagmittel (13) und Anschlagen an einem zweiten Anschlagpfosten (15),
(f) Führen des Wickeldrahtes (6") einer zweiten Phase vom zweiten Anschlagpfosten (15) in Richtung Stator (1), Umlenken des Wickeldrahtes (6") um ein erstes Drahtablenkmittel (9⁽¹⁾) und ein drittes Drahtumlenkmittel (7⁽³⁾) und dabei Durchführen durch die zweite Freisparung (10⁽²⁾) radial nach innen, Vorbeiführen an dem ersten Teildrahtführungsmittel (3⁽¹⁾) und Ablenken durch dieses, Durchführen durch eine erste Zusatzdrahtdurchführung (2⁽¹⁾) nach außen um das zweite Teildrahtführungsmittel (3⁽²⁾) herum, durch eine zweite Drahtdurchführung (8⁽²⁾) radial nach innen und Wickeln einer ersten Spule (S4) der zweiten Phase,
(g) Durchführung des Wickeldrahtes (6") durch die zweite Drahtdurchführung (8⁽²⁾) radial nach außen, Verlegung um mehrere Drahtführungsmittel (5⁽¹⁾, 5⁽²⁾, 5⁽³⁾), Durchführen durch eine fünfte Drahtdurchführung (8⁽⁵⁾) radial nach innen und Wickeln einer zweiten Spule (S5) der zweiten Phase,
(h) Durchführen des Wickeldrahtes (6") durch die fünfte Drahtdurchführung (8⁽⁵⁾) radial nach außen, Verlegung um mehrere Drahtführungsmittel (5⁽⁴⁾, 5⁽⁵⁾, 5⁽⁶⁾), durch eine achte Drahtdurchführung (8⁽⁸⁾) radial nach innen, Wickeln einer dritten Spule (S6) der zweiten Phase, Durchführung durch die achte Drahtdurchführung (8⁽⁸⁾) radial nach außen, Verlegung um ein Drahtführungsmittel (5) und Vorbeiführung an einem zweiten Drahtablenkmittel (9⁽²⁾),
(i) Führen des Wickeldrahtes (6") zu einem dritten Anschlagpfosten (16) des Anschlagmittels (13), Anschlagen des Wickeldrahtes (6) daran, Rückführung des Wickeldrahtes (6''') auf gleichem Weg in Richtung Stator 1, Führen um das zweite Drahtablenkmittel (9⁽²⁾) herum durch eine neunte Drahtdurchführung (8⁽⁹⁾) und um das erste Drahtumlenkmittel (7⁽¹⁾) herum anschließend durch die erste Freisparung (10⁽¹⁾) nach außen um das zweite Drahtumlenkmittel (7⁽²⁾) herum durch die zweite Freisparung (10⁽²⁾) nach innen, um das dritte Drahtumlenkmittel (7⁽³⁾) herum axial vor der Spule (S1) vorbei um das erste Teildrahtführungsmittel (3⁽¹⁾) herum, durch die erste Zusatzdrahtdurchführung (2⁽¹⁾) nach außen,
(j) Führen des Wickeldrahtes (6''') um das zweite Teildrahtführungsmittel 3⁽²⁾ und das erste Drahtführungsmittel (5⁽¹⁾) durch eine dritte Drahtdurchführung (8⁽³⁾) radial nach innen, Wickeln einer zweiten Spule (S7) der dritten Phase, Durchführen durch die dritte Drahtdurchführung (8⁽³⁾) nach außen, Verlegung um mehrere Drahtführungsmittel (5⁽²⁾, 5⁽³⁾, 5⁽⁴⁾) und einer sechsten Drahtdurchführung (8⁽⁶⁾) radial nach innen und Wickeln einer zweiten Spule (S8) der dritten Phase,
(k) Führen des Wickeldrahtes (6''') durch die sechste Drahtdurchführung (8⁽⁶⁾) radial nach außen, Verlegung um mehrere Drahtführungsmittel (5⁽⁵⁾, 5⁽⁶⁾) bzw. Teildrahtführungsmittel (3⁽³⁾, 3⁽⁴⁾) durch die neunte Drahtdurchführung (8⁽⁹⁾) radial nach innen;
(l) Wickeln einer dritten Spule (S9) der dritten Phase, Führen des Wickeldrahtes (6''') durch eine zweite Zusatzdrahtdurchführung (2⁽²⁾) radial nach außen, Verlegung des Wickeldrahtes (6''') um ein viertes Teildrahtführungsmittel (3⁽⁴⁾) und das erste Drahtumlenkmittel (7⁽¹⁾), Durchführung durch die erste Freisparung (10⁽¹⁾) nach innen, Touchieren des zweiten Drahtumlenkmittels (7⁽²⁾) und Umlenkung des Wickeldrahtes (6''') um das dritte Drahtumlenkmittel (7⁽³⁾) in Richtung Anschlagmittel (13) und Anschlagen am ersten Anschlagpfosten (14).

In einem anschließenden Verfahrensschritt ist vorgesehen, dass der Anschlussblock (28) rechtwinklig zur Erstreckungsrichtung der zwischen dem Stator (1) und dem Anschlagmittel (13) verlaufenden Wickeldrahtabschnitte (6', 6", 6") gefügt wird, so dass diese in Drahtverlegungsschlitzen (24) aufgenommen werden. Diese Drahtverlegungsschlitze (24) sind so ausgelegt, dass keine Klemmung der Wickeldrähte (6) vorkommen kann.

Anschließend wird der Anschlussblock (28) radial in Richtung Stator (1) auf einen Träger (22) geschoben, so dass in einer achsparallelen Richtung ein Formschluss hergestellt wird.

In dieser Position werden die Wickeldrahtabschnitte (6', 6", 6''') durch Schneid-Klemm-Kontakte (25), Schweiß- oder Lötkontakte elektrisch kontaktiert.

Schließlich werden die Wickeldrahtabschnitte (6', 6", 6''') nahe am Anschlussblock (28) durchtrennt und der Stator und die abgeschnittenen Wickeldrahtabschnitte (6', 6", 6''') aus der Wickelmaschine entnommen.

Ein Ausführungsbeispiel der Erfindung wird nachfolgend anhand der Zeichnung näher erläutert. Es zeigen:
- Fig. 1: eine räumliche Darstellung eines Stators,
- Fig. 2: eine Stirnansicht des Stators,
- Fig. 3: eine weitere räumliche Darstellung des Stators aus anderer Perspektive,
- Fig. 4: eine weitere Stirnansicht des Stators,
- Fig. 5: ein Schaltbild der Statorwicklung,
- Fig. 6: Bewicklung und Drahtverlegung der Statorwicklung (6a bis 6l) und
- Fig. 7: ein Anschlagmittel.

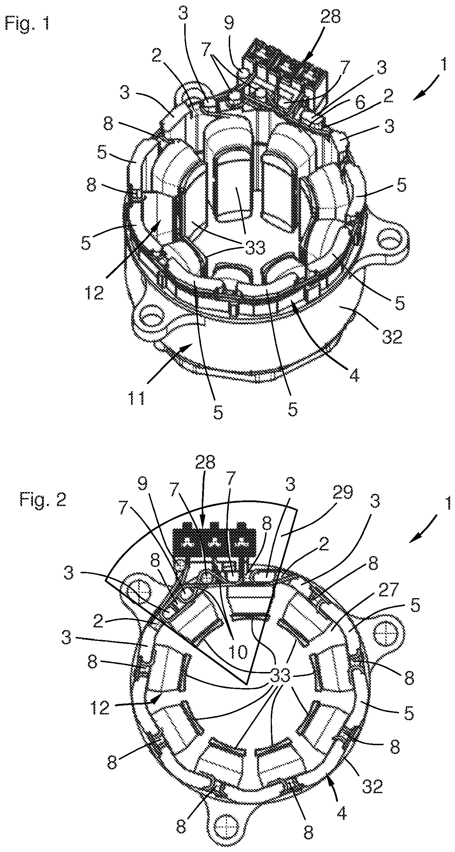

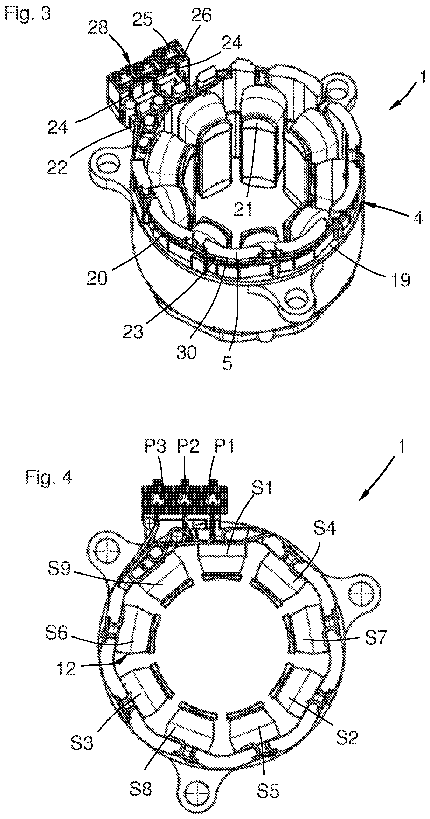

Fig. 1 zeigt eine räumliche Darstellung eines Stators 1 (Außenstator) gemäß der Erfindung, mit einem aus einer Vielzahl von Blechlamellen zusammengesetzten und ausgeprägte Innenpole aufweisenden Statorkern 11, bestehend aus einem geschlossenen Rückschlussring 32 und Statorpolen 33, einem Isolierstoffkörper 4 und einer dreiphasigen Wicklung 12, welche als Dreieckschaltung mit jeweils drei Spulen in Reihe ausgeführt ist. Jede Phase ist mit einem Anschluss eines Anschlussblocks 28 elektrisch verbunden. Der Anschlussblock 28 ist gemäß einer Schneid-Klemm-Verbindung ausgebildet und weist hierfür Drahtverlegungsschlitze 24 (siehe Fig. 3) und rechtwinklig hierzu Aufnahmeschächte 26 (siehe Fig. 3) für Schneid-Klemm-Kontakte 25 (siehe Fig. 3) auf. Der für die Erfindung wesentliche Isolierstoffkörper 4 ist als Endkappe ausgeführt, welche eine Stirnseite und Wickelraumbereiche der Statorpole 33 abdeckt. Radial außen ist der Isolierstoffkörper 4 ringförmig ausgebildet, bedeckt den Rückschlussring 32 und erstreckt sich axial in Form von Drahtführungsmitteln 5, bzw.

Teildrahtführungsmitteln 3, welche durch Drahtdurchführungen 8, bzw. Zusatzdrahtdurchführungen 2 vielfach unterbrochen sind. Über den gesamten Umfang des Isolierstoffkörpers 4 sind die Drahtdurchführungen 8 regelmäßig über jedem Statorpol 33 angeordnet. Am Rand eines Segmentbereichs 29 (siehe Fig. 2), welcher von zwei Statorpolen 33 eingenommen und begrenzt wird, sind zwei Zusatzdrahtdurchführungen 2 und innerhalb des Segmentbereichs 29 in einem Zwischenpolbereich zwei Freisparungen 10 vorhanden, welche ebenfalls der Drahtdurchführung 8 dienen. In diesem Segmentbereich 29 befindet sich radial außerhalb des Rückschlussrings 32 mit geringem Abstand davon der Anschlussblock 28. Vorteil dieser Anordnung ist, dass radial weiter außen liegende Umlenkpfosten weitgehend entfallen können. Drahtumlenkmittel 7 dienen zur korrekten Anordnung und Ausrichtung eines Wickeldrahts 6 im Bereich der Phasenanschlüsse am Anschlussblock 28. Weiter ist ein Drahtablenkmittel 9 im Bereich zwischen dem Rückschlussring 32 und dem Anschlussblock 28 vorgesehen. Insgesamt ergibt sich mit der erfindungsgemäßen Ausführung eine sehr platzsparende Anordnung des Anschlussbereichs. Insbesondere ist der Wickeldraht 6 mehrmals im Innenbereich 27 radial innerhalb der Drahtführungsmittel 5, bzw. Teildrahtführungsmittel 3 und der Drahtumlenkmittel 7 verlegt, wobei diese entsprechenden Drahtabschnitte in einem Innenbereich 27 (siehe Fig. 2) innerhalb des Rückschlussrings 32 jeweils axial vor einer bereits gewickelten Spule verlaufen, ohne hierfür zusätzlichen Bauraum zu benötigen. Die Drahtdurchführungen 8 und Zusatzdrahtdurchführungen 2 sind so ausgelegt, dass eine Wickelnadel gerade mit etwas Spiel hindurchpasst. Dies ermöglicht eine sehr kompakte Bauweise. Der Stator 1 umfasst einen zweiten ähnlichen Isolierstoffkörper 4, jedoch keine Drahtführungsmittel 5 und Drahtdurchführungen 8.

Fig. 2 zeigt eine Stirnansicht des Stators 1. Hierbei ist der Segmentbereich 29 eingezeichnet, welcher zwei Statorpole 33 umfasst. In diesem Segmentbereich 29 befinden sich weiter der Anschlussblock 28, zwei der Teildrahtführungsmittel 3, zwei der Drahtdurchführungen 8, drei Drahtumlenkmittel 7 und zwei Freisparungen 10, welche die Drahtumlenkmittel 7 voneinander trennen. Zwei Zusatzdrahtdurchführungen 2 befinden sich am Rand des genannten Segmentbereichs 29 und trennen die Teildrahtführungsmittel 3 voneinander. Die übrigen Drahtführungsmittel 5 bilden jeweils eine Drahtführungsbrücke zwischen zwei benachbarten Statorpolen 33. Die Wicklung 12 wird durch die Gesamtheit der auf die Statorpole 33 gewickelten Einzelspulen gebildet.

Fig. 3 zeigt eine weitere räumliche Darstellung des Stators 1 aus anderer Perspektive. Hier ist insbesondere der auf einem mit dem Isolierstoffkörper 4 einstückigen Träger 22 montierte Anschlussblock 28 hervorgehoben; er weist drei Drahtverlegungsschlitze 24 und drei Aufnahmeschächte 26 auf, in welchem jeweils ein Schneid-Klemm-Kontakt 25 montiert ist. Weiter ist hier eine Rückschlussringabdeckung 19 und eine Polabdeckung 21 als Bestandteil des Isolierstoffkörpers 4 und ein Absatz 30 zwischen dem axialen Ende eines Drahtführungsmittels 5 und einer Drahtführungsrille 23 dargestellt.

Fig. 4 zeigt eine weitere Stirnansicht des Stators 1, wobei hier die Anordnung der Wicklung 12 hervorgehoben ist. Der Stator 1 weist eine Dreiphasen-Dreieckschaltung auf, welche drei Phasenanschlüsse P1, P2 und P3 umfasst. Zwischen jedem Phasenanschluss und einem weiteren Phasenanschluss sind hier drei in Reihe gewickelte Einzelspulen angeordnet. Die Spulen S1, S2 und S3 sind zwischen den Phasenanschlüssen P1 und P2 geschaltet, die Spulen S4, S5 und S6 sind zwischen den Phasenanschlüssen P2 und P3 geschaltet und die Spulen S7, S8 und S9 sind zwischen den Phasenanschlüssen P3 und P1 geschaltet.

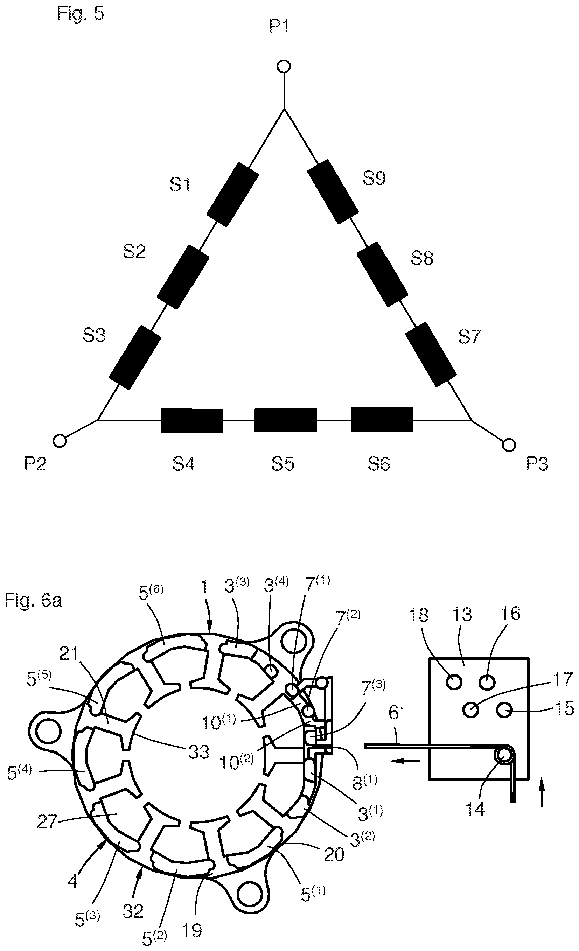

Fig. 5 zeigt ein Schaltbild der Statorwicklung mit den Phasenanschlüssen P1, P2 und P3, sowie den Einzelspulen S1 bis S9.

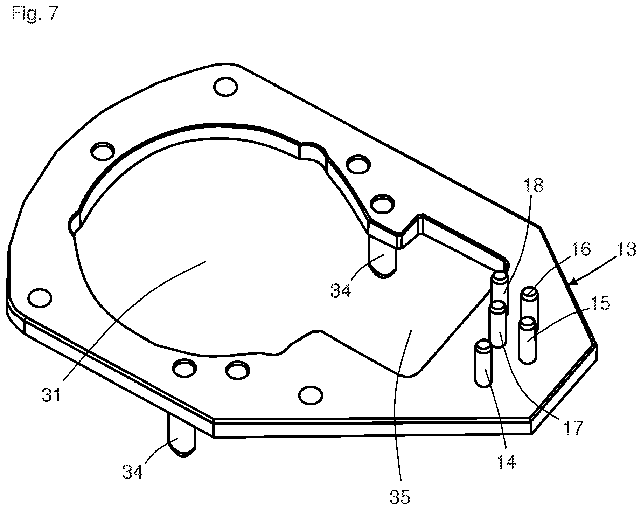

Fig. 6a bis 6l zeigen schrittweise die Einzelbewicklung der Statorpole 33 und die Verlegung des Wickeldrahts (6) in der beanspruchten Reihenfolge und im beanspruchten Verlauf. Der Wickeldraht (6) der ersten Phase wird mit 6', der zweiten Phase mit 6" und der dritten Phase mit 6''' bezeichnet. Die grundsätzliche Reihenfolge der Bewicklung erfolgt in den Darstellungen entgegen dem Uhrzeigersinn. In einer Wickelvorrichtung (der Einfachheit halber nicht dargestellt) ist ein mit Isolierstoffkörpern 4 versehener Stator 1 und ein nicht zum Stator 1 gehörendes Anschlagmittel 13 angeordnet (hier stilisiert - Fig. 7 zeigt eine genauere Darstellung). Das Anschlagmittel 13 ist Teil eines Werkstückträgers und weist einen ersten Anschlagpfosten 14 für die erste Phase, einen zweiten Anschlagpfosten 15 für die zweite Phase und einen dritten Anschlagpfosten 16 für die dritte Phase sowie einen ersten Ablenkpfosten 17, welcher dem zweiten Anschlagpfosten 15 zugeordnet ist und ein zweiter Ablenkpfosten 18, welcher dem dritten Anschlagpfosten 16 zugeordnet ist, auf. Der Isolierstoffkörper 4 besteht aus Polabdeckungen 21, welche im Innenbereich 27 angeordnet sind und einer Rückschlussringabdeckung 19, welche den Rückschlussring 32 abdeckt. Die Rückschlussringabdeckung 19 begrenzt den Innenbereich 27 radial nach außen. Die aus dem Isolierstoffkörper 4 axial vorspringenden Drahtführungsmittel 5⁽¹⁾, 5⁽²⁾, 5⁽³⁾, 5⁽⁴⁾, 5⁽⁵⁾ und 5⁽⁶⁾ und Teildrahtführungsmittel 3⁽¹⁾, 3⁽²⁾, 3⁽³⁾ und 3⁽⁴⁾ weisen einen Drahtführungsbereich 20 mit darin ausgebildeten Drahtführungsrillen 23 (deutlicher in Fig. 3 zu erkennen) auf. Aus der Rückschlussringabdeckung 19 des Isolierstoffkörpers 4 springen axial drei Drahtumlenkmittel 7⁽¹⁾, 7⁽²⁾ und 7⁽³⁾ vor, welche zwischen dem ersten und dem vierten Teildrahtführungsmittel 3⁽¹⁾ und 3⁽⁴⁾ im Anschlussbereich angeordnet sind. Das erste Drahtumlenkmittel 7⁽¹⁾ ist durch einen ersten Freiraum 10⁽¹⁾ vom zweiten Drahtumlenkmittel 7⁽²⁾ getrennt und dieses durch einen zweiten Freiraum 10⁽²⁾ vom dritten Drahtumlenkmittel 7⁽³⁾.

Die Bewicklung beginnt mit dem Anschlagen (hier durch Umwickeln befestigt) des Wickeldrahts 6' an den ersten Anschlagpfosten 14 (Fig. 6a) des Anschlagmittels 13. Von dort wird der Wickeldraht 6' in Richtung Stator 1 zu einer ersten Drahtdurchführung 8⁽¹⁾ zwischen dem ersten Teildrahtführungsmittel 3⁽¹⁾ und dem dritten Drahtumlenkmittel 7⁽³⁾ geführt.

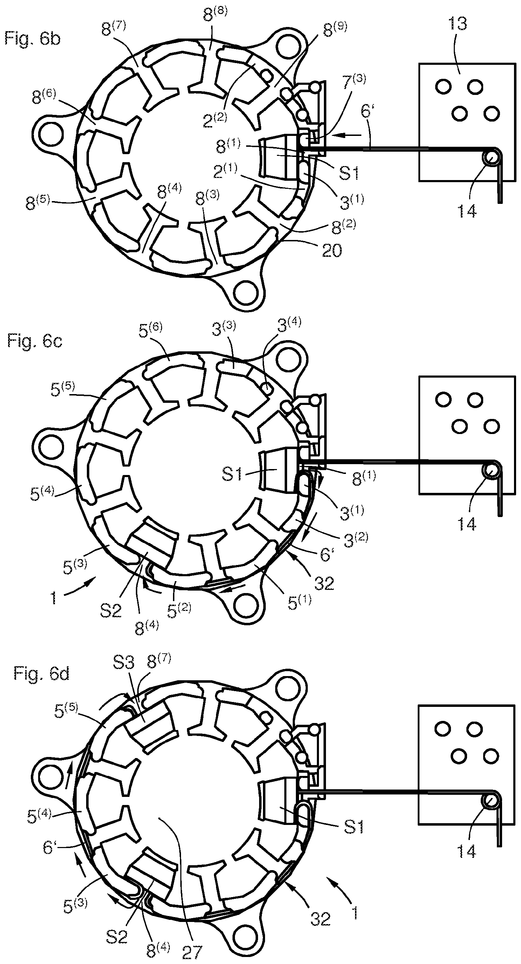

In Fig. 6b ist der Wickeldraht 6' durch die erste Drahtdurchführung 8⁽¹⁾ hindurchgeführt, um das dritte Drahtumlenkmittel 7⁽³⁾ herumgelegt und bildet eine erste Spule S1. In Fig. 6b sind auch die jeweils einer der Spulen (S1 bis Sₙ) zugeordneten Drahtdurchführungen 8⁽¹⁾ bis 8⁽⁹⁾ und zwei Zusatzdrahtdurchführungen 2⁽¹⁾ und 2⁽²⁾ zu erkennen.

Fig. 6c zeigt die Drahtverlegung des Wickeldrahtes 6' am Isolierstoffkörper 4 und eine gewickelte zweite Spule S2. Ausgehend von der ersten Spule S1 ist der Wickeldraht 6' um das erste Teildrahtführungsmittel 3⁽¹⁾ herumgelegt und verläuft dabei durch die erste Drahtdurchführung 8⁽¹⁾ radial nach außen, von dort über ein zweites Teildrahtführungsmittel 3⁽²⁾ und die Drahtführungsmittel 5⁽¹⁾ und 5⁽²⁾. Anschließend quert der Wickeldraht 6' eine vierte Drahtdurchführung 8⁽⁴⁾ radial nach innen und bildet dort die zweite Spule S2. Der Isolierstoffkörper 4 weist am größten Teil seines Umfanges drei Drahtführungsrillen 23 auf. Die Drahtführungsrillen 23 bilden den Drahtführungsbereich 20. Der Wickeldraht 6' verläuft hier in der dem Rückschlussring 32 am nächsten liegenden Rille. Die Drahtführungsrillen 23 sind in einem ersten bis sechsten Drahtführungsmittel 5⁽¹⁾, 5⁽²⁾, 5⁽³⁾, 5⁽⁴⁾, 5⁽⁵⁾, 5⁽⁶⁾ bzw. ersten bis vierten Teildrahtführungsmittel 3⁽¹⁾, 3⁽²⁾, 3⁽³⁾ und 3⁽⁴⁾ eingeformt, welche inselartig voneinander getrennt sind.

Fig. 6d zeigt den Stator 1 mit einer gewickelten Spule S3. Auch zwischen den beiden Spulen S2 und S3 verläuft der Wickeldraht 6' in der Rille, die dem Rückschlussring 32 am nächsten liegt. Dabei verlässt der Wickeldraht (6') den Innenbereich 27 durch die vierte Drahtdurchführung 8⁽⁴⁾, verläuft über den Außenbereich der Drahtführungsmittel 5⁽³⁾, 5⁽⁴⁾ und 5⁽⁵⁾ und tritt durch eine siebte Drahtdurchführung 8⁽⁷⁾ wieder in den Innenbereich 27 ein und bildet dort die dritte Spule S3.

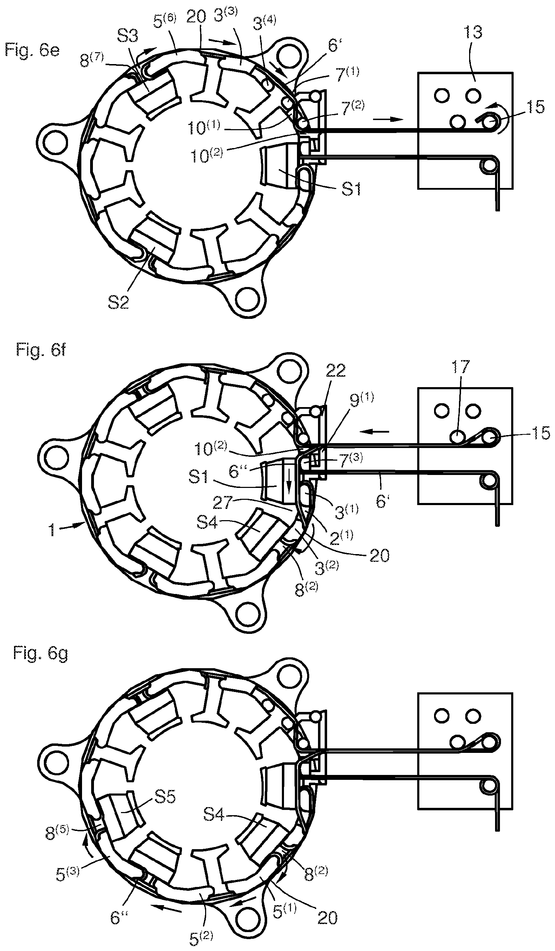

Fig. 6e zeigt den weiteren Verlauf des Wickeldrahts 6', ausgehend von der Spule S3 über den Drahtführungsbereich 20 des sechsten Drahtführungsmittels 5⁽⁶⁾, bzw. des dritten und vierten Teildrahtführungsmittels 3⁽³⁾, 3⁽⁴⁾ und weiter um das erste Drahtumlenkmittel 7⁽¹⁾ an deren radial äußerer Seite, radial nach innen durch die erste Freisparung 10⁽¹⁾ um das zweite Drahtumlenkmittel 7⁽²⁾ auf dessen radial innerer Seite herum, durch die zweite Freisparung 10⁽²⁾ hindurch, wobei sich die Richtung des Drahtverlaufs um ca. 90° ändert und von dort zum zweiten Anschlagpfosten 15 des Anschlagmittels 13 und um den zweiten Anschlagpfosten 15 herum.

In Fig. 6f ist der Wickeldraht 6" der zweiten Phase vom zweiten Anschlagpfosten 15 kommend um den ersten Ablenkpfosten 17 herumgelegt und zum Stator 1 zurückgeführt. Bevor er dort durch die zweite Freisparung 10⁽²⁾ hindurchtritt, wird er durch ein erstes Drahtablenkmittel 9⁽¹⁾ abgelenkt und um das dritte Drahtumlenkmittel 7⁽³⁾ herumgelegt. Bei dem ersten Drahtablenkmittel 9⁽¹⁾ handelt es sich um ein Teil eines Trägers 22 für den Anschlussblock 28 (siehe Fig. 1 bis 3). Das erste Drahtablenkmittel 9⁽¹⁾ dient dazu den Drahtverlauf im Anschlussblock 28 parallel zu halten. Anschließend verläuft der Wickeldraht 6" im Innenbereich 27 axial vor der bereits bewickelten ersten Spule S1 radial innen vorbei am ersten Teildrahtführungsmittel 3⁽¹⁾, durch die erste Zusatzdrahtdurchführung 2⁽¹⁾ radial nach außen und dort um das zweite Teildrahtführungsmittel 3⁽²⁾ in der mittleren von drei Rillen des Drahtführungsbereichs 20 und weiter durch eine zweite Drahtdurchführung 8⁽²⁾ hindurch und bildet dort eine vierte Spule S4.

Fig. 6g zeigt den weiteren Verlauf des Wickeldrahts 6" von der Spule S4 ausgehend durch die zweite Drahtdurchführung 8⁽²⁾ radial nach außen über jeweils die mittlere von drei Rillen des Drahtführungsbereichs 20 der Drahtführungsmittel 5⁽¹⁾, 5⁽²⁾ und 5⁽³⁾ und durch eine fünfte Drahtdurchführung 8⁽⁵⁾ radial nach innen und bildet dort eine fünfte Spule S5.

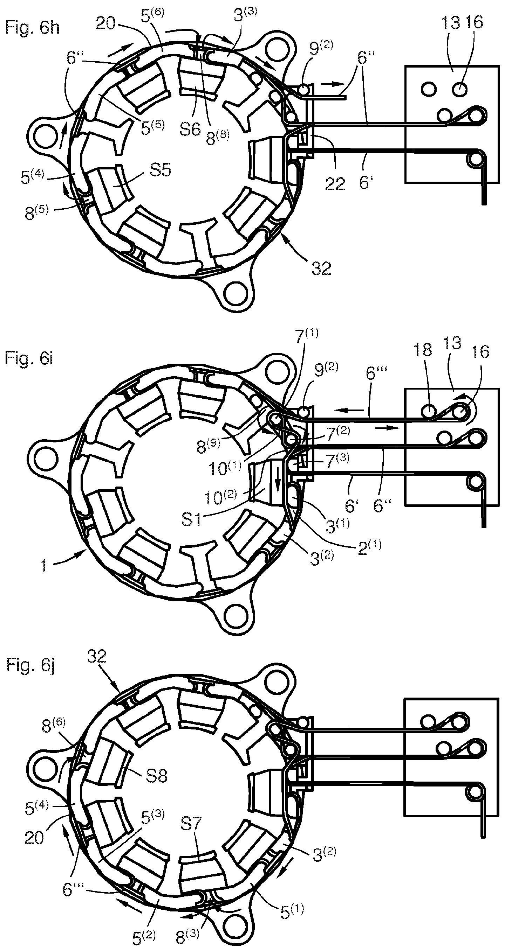

Fig. 6h verdeutlicht den Verlauf des Wickeldrahts 6" von der fünften Spule S5 zu einer sechsten Spule S6 und weiter Richtung Anschlagmittel 13. Von der fünften Spule S5 verläuft der Wickeldraht 6" durch die fünfte Drahtdurchführung 8⁽⁵⁾ radial nach außen und wird über die vierten bis sechsten Drahtführungsmittel 5⁽⁴⁾, 5⁽⁵⁾ und 5⁽⁶⁾ und über eine achte Drahtdurchführung 8⁽⁸⁾ radial nach innen geführt und bildet dort eine sechste Spule S6. Von der sechsten Spule S6 verläuft der Wickeldraht 6" durch die achte Drahtdurchführung 8⁽⁸⁾ radial nach außen um das dritte Teildrahtführungsmittel 3⁽³⁾ herum zu einem zweiten Drahtablenkmittel 9⁽²⁾, welches den Wickeldraht 6" in Richtung Anschlagmittel 13 lenkt. Das zweite Drahtablenkmittel 9⁽²⁾ liegt radial außerhalb des Rückschlussrings 32 und ist Bestandteil des Trägers 22 für den Anschlussblocks 28 (siehe Fig. 1 bis 3). Auch der letzte Abschnitt des Wickeldrahts 6" für die zweite Phase ist in der mittleren von drei Rillen des Drahtführungsbereichs 20 angeordnet.

Fig. 6i zeigt den ersten Abschnitt des Verlaufs des Wickeldrahts 6''' für die dritte Phase der Wicklung 12. Zunächst ist der Wickeldraht 6" der zweiten Phase bis zum dritten Anschlagpfosten 16 des Anschlagmittels 13 und um diesen herum geführt. Von da ab verläuft der Wickeldraht 6''' der dritten Phase vorbei an dem zweiten Ablenkpfosten 18, welcher den Wickeldraht 6''' in Richtung auf den Stator 1 lenkt.

Der Wickeldraht 6''' wird vom zweiten Drahtablenkmittel 9⁽²⁾ leicht abgewinkelt und verläuft dann durch eine neunte Drahtdurchführung 8⁽⁹⁾ radial nach innen und vollführt um das erste Drahtumlenkmittel 7⁽¹⁾ eine 180°-Wende. Weiter durchläuft der Wickeldraht 6''' schräg die erste Freisparung 10⁽¹⁾ nach außen, wird vom zweiten Drahtumlenkmittel 7⁽²⁾ um mehr als 90° abgelenkt und durch die zweite Freisparung 10⁽²⁾ wieder schräg nach innen geführt, vom dritten Drahtumlenkmittel 7⁽³⁾ etwa 45° abgelenkt und axial außerhalb der Spule S1 vorbei schräg durch die erste Zusatzdrahtdurchführung 2⁽¹⁾ nach außen geführt. Dabei wird der Wickeldraht 6''' etwa 30° um das erste Teildrahtführungsmittel 3⁽¹⁾ abgelenkt und dort um das zweite Teildrahtführungsmittel 3⁽²⁾ geführt.

In Fig. 6j ist der Verlauf des Wickeldrahts 6''' vom zweiten Teildrahtführungsmittel 3⁽²⁾, über das erste Drahtführungsmittel 5⁽¹⁾ durch eine dritte Drahtdurchführung 8⁽³⁾ radial nach innen geführt dargestellt. Dort bildet dieser eine siebte Spule S7. Von der sieben Spule S7 wird der Wickeldraht 6''' zurück durch die dritte Drahtdurchführung 8⁽³⁾ radial nach außen über die Drahtführungsmittel 5⁽²⁾, 5⁽³⁾ und 5⁽⁴⁾ und durch eine sechste Drahtdurchführung 8⁽⁶⁾ radial nach innen geführt und bildet dort eine Spule S8. Der Wickeldraht 6''' verläuft hierbei in der dritten von drei Rillen im Drahtführungsbereich 20 des zweiten Teildrahtführungsmittels 3⁽²⁾ und der ersten vier Drahtführungsmittel, 5⁽¹⁾, 5⁽²⁾, 5⁽³⁾ und 5⁽⁴⁾, welche axial am weitesten vom Rückschlussring 32 entfernt sind.

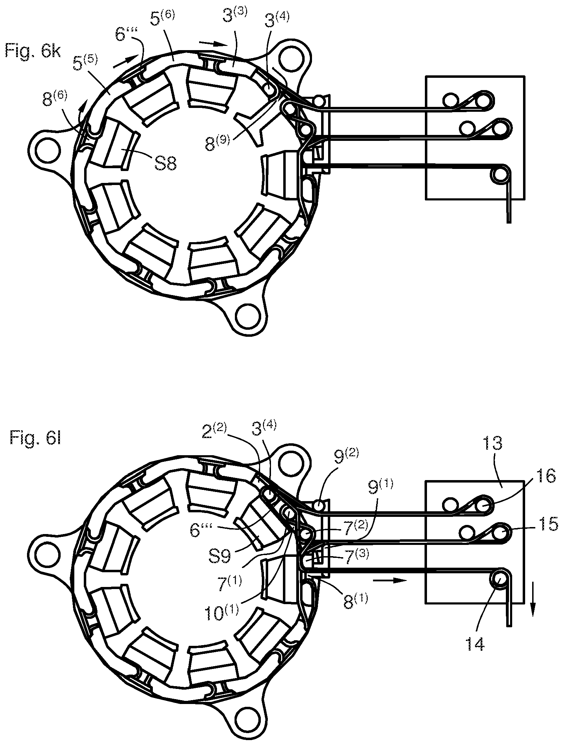

Fig. 6k zeigt die weitere Drahtverlegung des Wickeldrahts 6''' von der achten Spule S8 durch die sechste Drahtdurchführung 8⁽⁶⁾ radial nach außen über die Drahtführungsmittel 5⁽⁵⁾ und 5⁽⁶⁾, bzw. Teildrahtführungsmittel 3⁽³⁾ und 3⁽⁴⁾ durch die neunte Drahtdurchführung 8⁽⁹⁾ radial nach innen.

In Fig. 6l wird die dritte Phase vollendet. Der Wickeldraht 6''' bildet eine neunte Spule S9 und verläuft anschließend durch die zweite Zusatzdrahtdurchführung 2⁽²⁾ radial nach aussen um das vierte Teildrahtführungsmittel 3⁽⁴⁾ herum, vollzieht dabei eine 180°-Wende, wird anschließend vom ersten Drahtumlenkmittel 7⁽¹⁾ um ca. 45° abgelenkt, durchläuft schräg die erste Freisparung 10⁽¹⁾ nach innen, touchiert das zweite Drahtumlenkmittel 7⁽²⁾ und wird vom dritten Drahtumlenkmittel 7⁽³⁾ um 90° umgelenkt in Richtung Anschlagmittel 13 und dort am ersten Anschlagpfosten 14 herumgeführt und angeschlagen. Die Abstände der Anschlagpfosten 14, 15 und 16 sind auf die Abstände und Anordnung des zweiten und dritten Drahtumlenkmittels 7⁽²⁾ und 7⁽³⁾ und der Drahtablenkmitteln 9⁽¹⁾ und 9⁽²⁾ so abgestimmt, dass die Wickeldrähte 6 (es handelt sich dabei um Wickeldrahtabschnitte desselben Wickeldrahtes) 6', 6" und 6''' zwischen dem Stator 1 und dem Anschlagmittel 13 parallel zueinander verlaufen.

In Fig. 7 ist das Anschlagmittel 13 mit der Werkstückaufnahme 31 dargestellt. Deutlich erkennbar sind darin die Anschlagpfosten 14, 15 und 16, sowie die Ablenkpfosten 17 und 18. Die Werkstückaufnahme 31 ist radial um eine Anschlussblockfreisparung 35 erweitert. Das Anschlagmittel 13 sorgt in der Wickelvorrichtung für definierte Abstände zwischen den Anschlagpfosten 14, 15, 16 und dem Stator 1. Aufnahmestifte 34 dienen der definierten Aufnahme des Anschlussmittels 13 im Werkstückträger (nicht dargestellt), welcher die weitere Montage des Gleichstrommotors erleichtert bzw. der definierten Aufnahme des Anschlussmittels 13 in der Wickelvorrichtung (nicht dargestellt).

**Bezugszeichenliste**

| | | | |
|---|---|---|---|
| 1 | Stator | 32 | Rückschlussring |
| 2 | Zusatzdrahtdurchführung | 33 | Statorpol |
| 3 | Teildrahtführungsmittel | 34 | Aufnahmestift |
| 4 | Isolierstoffkörper | 35 | Anschlussblockfreisparung |
| 5 | Drahtführungsmittel | | |
| 6 | Wickeldraht | | |
| 7 | Drahtumlenkmittel | | |
| 8 | Drahtdurchführung | | |
| 9 | Drahtablenkmittel | | |
| 10 | Freisparung | | |
| 11 | Statorkern | | |
| 12 | Wicklung | | |
| 13 | Anschlagmittel (Werkzeug) | | |
| 14 | erster Anschlagpfosten | | |
| 15 | zweiter Anschlagpfosten | | |
| 16 | dritter Anschlagpfosten | | |
| 17 | erster Ablenkpfosten | | |
| 18 | zweiter Ablenkpfosten | | |
| 19 | Rückschlussringabdeckung | | |
| 20 | Drahtführungsbereich | | |
| 21 | Polabdeckung | | |
| 22 | Träger (für Anschlussblock) | | |
| 23 | Drahtführungsrille | | |
| 24 | Drahtverlegungsschlitz | | |
| 25 | Schneid-Klemm-Kontakt | | |
| 26 | Aufnahmeschacht (für Kontakt) | | |
| 27 | Innenbereich | | |
| 28 | Anschlussblock | | |
| 29 | Segmentbereich | | |
| 30 | Absatz | | |
| 31 | Werkstückaufnahme | | |

## Patentansprüche

1. Elektronisch kommutierter Gleichstrommotor mit einem Innenrotor und einem dreiphasigen Stator (1), **dadurch gekennzeichnet, dass** der Gleichstrommotor nach einem Verfahren nach Anspruch 16 hergestellt ist.

2. Elektronisch kommutierter Gleichstrommotor nach Anspruch 1, **dadurch gekennzeichnet, dass** zumindest zwei der drei benachbarten Drahtumlenkmittel (7⁽¹⁾, 7⁽²⁾) ausschließlich der Drahtumlenkung dienen und dass kein Wickeldrahtabschnitt von einem dieser zwei Drahtumlenkmitteln (7⁽¹⁾, 7⁽²⁾) ausgehend unmittelbar zu einer der Spulen (S1 bis Sₙ) führt und dass der Wickeldraht (6) bei beiden Drahtumlenkmitteln (7⁽¹⁾, 7⁽²⁾) zumindest einmal radial außen und einmal radial innen vorbeigeführt ist.

3. Elektronisch kommutierter Gleichstrommotor nach Anspruch 2, **dadurch gekennzeichnet, dass** der Wickeldraht (6) am dritten Drahtumlenkmittel (7⁽³⁾) nur radial innen vorbeigeführt ist.

4. Elektronisch kommutierter Gleichstrommotor nach Anspruch 1, 2 oder 3, **dadurch gekennzeichnet, dass** die Drahtführungsmittel (5) des Isolierstoffkörpers (4) im Bereich jedes Statorpols (33) zumindest eine radial ausgerichtete Drahtdurchführung (8) aufweisen, die dazu geeignet ist den Wickeldraht (6) zwischen einem Raumbereich radial innerhalb des Drahtführungsmittels (5) und einem Raumbereich radial außerhalb des Drahtführungsmittels (5) aufzunehmen.

5. Elektronisch kommutierter Gleichstrommotor nach Anspruch 4, **dadurch gekennzeichnet, dass** zumindest die beiden den Drahtumlenkmitteln (7) benachbarten Drahtführungsmittel (5) Zusatzdrahtdurchführungen (2) aufweisen und daher in Teildrahtführungsmittel (3) getrennt sind.

6. Elektronisch kommutierter Gleichstrommotor nach zumindest einem der vorangehenden Ansprüche, **dadurch gekennzeichnet, dass** zumindest zwei Wickeldrahtabschnitte das erste, das zweite und das dritte Drahtumlenkmittel (7⁽¹⁾, 7⁽²⁾, 7⁽³⁾) nacheinander berühren.

7. Elektronisch kommutierter Gleichstrommotor nach Anspruch 6, **dadurch gekennzeichnet, dass** die Wickeldrahtabschnitte auf kürzestem Wege mit einer der Phasenanschlüsse P1, P2 oder P3 verbunden sind.

8. Elektronisch kommutierter Gleichstrommotor nach zumindest einem der vorangehenden Ansprüche, **dadurch gekennzeichnet, dass** die Drahtumlenkmittel (7) keine Hinterschnitte in axialer Richtung aufweisen.

9. Elektronisch kommutierter Gleichstrommotor nach zumindest einem der vorangehenden Ansprüche, **dadurch gekennzeichnet, dass** ein radialer Abstand von Schneidkanten eines Schneid-Klemm-Kontakts (25) zum radial äußeren Rand des Rückschlussrings (32) maximal das Vierfache der Breite einer Freisparung (10) entspricht.

10. Elektronisch kommutierter Gleichstrommotor nach zumindest einem der vorangehenden Ansprüche, **dadurch gekennzeichnet, dass** die Tiefe der Freisparungen (10) zumindest die vierfache Drahtdicke und zusätzlich der Dicke eines Absatzes (30) zwischen einer Drahtführungsrille (23) am Außenumfang der Drahtführungsmittel (5) und dem axialen Ende des Drahtführungsmittels (5) beträgt.

11. Elektronisch kommutierter Gleichstrommotor nach zumindest einem der vorangehenden Ansprüche, **dadurch gekennzeichnet, dass** der Wickeldraht (6) außerhalb der Spulen (S1 bis Sₙ) und des Anschlussblocks (28) untereinander berührungsfrei in unterschiedlichen Ebenen verlegt ist.

12. Elektronisch kommutierter Gleichstrommotor nach zumindest einem der vorangehenden Ansprüche, **dadurch gekennzeichnet, dass** die Drahtführungsmittel (5) und die Drahtumlenkmittel (7) über den Umfang der Rückschlussringabdeckung (19) verteilt sind, wobei sowohl die Drahtdurchführungen (8) als auch die Freisparungen (10) eine lichte Weite aufweisen, welche eine Wickelnadel zum Bewickeln der Spulen (S1 bis Sₙ) und Verlegen des Wickeldrahtes (6) problemlos passieren lässt.

13. Elektronisch kommutierter Gleichstrommotor nach zumindest einem der vorangehenden Ansprüche, **dadurch gekennzeichnet, dass** der Stator (1) eine dreiphasige Wicklung aufweist, welche als Dreieckschaltung mit jeweils mehreren in Reihe verschalteten Spulen (S1 bis Sₙ) ausgebildet ist.

14. Elektronisch kommutierter Gleichstrommotor nach zumindest einem der vorangehenden Ansprüche, **dadurch gekennzeichnet, dass** der Wickeldraht (6) mehrfach an einem Anschlussblock (28) elektrisch angeschlossen ist, welcher in einem Segmentbereich (29) angeordnet ist.

15. Elektronisch kommutierter Gleichstrommotor nach zumindest einem der vorangehenden Ansprüche, **dadurch gekennzeichnet, dass** zwischen der Rückschlussringabdeckung (19) und dem Anschlussblock (28) radial außerhalb des Rückschlussrings (32) zumindest ein Drahtablenkmittel (9) angeordnet ist.

16. Verfahren zur Bewicklung eines elektronisch kommutierten Gleichstrommotors, folgende Verfahrensschritte umfassend:
(a) Bereitstellen eines wiederverwendbaren Anschlagmittels (13) als Teil eines Werkstückträgers, Bereitstellen eines Stators (1) welcher einen geschlossenen Rückschlussring (32), eine Vielzahl von mit diesem einstückigen, nach innen gerichteten Statorpolen (33) und einen Isolierstoffkörper (4) aufweist, welcher die Statorpole (33) durch Polabdeckungen (21) und den Rückschlussring (32) durch eine Rückschlussringabdeckung (19) axial bedeckt und der Isolierstoffkörper (4) sich achsparallel erstreckende Drahtführungsmittel (5) aufweist, welche durch Drahtdurchführungen (8) voneinander getrennt sind, wobei n Statorpole (33) vorgesehen sind, und jeder Statorpol (33) mit einer Spule (S₁ bis Sₙ) bewickeltbar ist, wobei zusätzlich zumindest drei einander benachbarte Drahtumlenkmittel (7) aus der Rückschlussringabdeckung (19) achsparallel vorspringen, welche durch zwei Freisparungen (10⁽¹⁾, 10⁽²⁾) voneinander getrennt sind und zumindest n Drahtdurchführungen (8) zwischen den Drahtführungsmitteln (5) untereinander oder zwischen den Drahtführungsmitteln (5) und den Drahtumlenkmitteln (7) vorgesehen sind, wobei die Freisparungen (10⁽¹⁾, 10⁽²⁾) einem radial außerhalb der Rückschlussringabdeckung (19) anzuordnenden Anschlussblock (28) gegenüberliegen, in dem drei Schneid-Klemm-Kontakte (25), Schweiß- oder Lötkontakte darin aufgenommen sind, Montage des Stators (1) am Anschlagmittel (13), Einlegen dieser Anordnung in eine Wickelvorrichtung, Anschlagen eines Wickeldrahtes (6') an einem ersten Anschlagpfosten (14) des Anschlagmittels (13) und Führen des Wickeldrahtes (6') in einer ersten Ebene zum Stator (1) durch eine erste Drahtdurchführung (8⁽¹⁾) der zumindest n Drahtdurchführungen des Isolierstoffkörpers (4),
(b) Wickeln einer ersten Spule (S1) einer ersten Phase,
(c) Verlegung des Wickeldrahtes (6') zwischen der ersten Spule (S1) über die erste Drahtdurchführung (8⁽¹⁾) radial nach außen und über mehrere Teildrahtführungsmittel (3⁽¹⁾, 3⁽²⁾) und Drahtführungsmittel (5⁽¹⁾, 5⁽²⁾) in einer ersten Drahtführungsrille (23) in der ersten axial nahe am Rückschlussring (32) gelegenen ersten Ebene, Umlenken des Wickeldrahtes (6') nach innen durch eine vierte Drahtdurchführung (8⁽⁴⁾) der zumindest n Drahtdurchführungen und Wickeln einer zweiten Spule (S2) der ersten Phase,
(d) Durchführung des Wickeldrahts (6') durch die vierte Drahtdurchführung (8⁽⁴⁾) radial nach außen, Verlegen um mehrere Drahtführungsmittel (5⁽³⁾, 5⁽⁴⁾, 5⁽⁵⁾) in der ersten Ebene und weitere Verlegung durch eine siebte Drahtdurchführung (8⁽⁷⁾) der zumindest n Drahtdurchführungen radial nach innen und Wickeln einer dritten Spule (S3) der ersten Phase,
(e) Durchführung des Wickeldrahts (6') durch die siebte Drahtdurchführung (8⁽⁷⁾) radial nach außen und Verlegen um das Drahtführungsmittel (5⁽⁶⁾) und um die Teildrahtführungsmittel (3⁽³⁾, 3⁽⁴⁾) in der ersten Ebene und um das erste Drahtumlenkmittel (7⁽¹⁾) herum durch die erste Freisparung (10⁽¹⁾), um das zweite Drahtumlenkmittel (7⁽²⁾) herum radial nach außen durch die zweite Freisparung (10⁽²⁾) in Richtung Anschlagmittel (13) in der ersten Ebene und Anschlagen an einem zweiten Anschlagpfosten (15),
(f) Führen des Wickeldrahtes (6") einer zweiten Phase vom zweiten Anschlagpfosten (15) in Richtung Stator (1) in einer zweiten Ebene, Umlenken des Wickeldrahtes (6") um ein erstes Drahtablenkmittel (9⁽¹⁾) und das dritte Drahtumlenkmittel (7⁽³⁾) und dabei Durchführen durch die zweite Freisparung (10⁽²⁾) radial nach innen, Vorbeiführen an dem ersten Teildrahtführungsmittel (3⁽¹⁾) und Ablenken durch dieses, Durchführen durch eine erste Zusatzdrahtdurchführung (2⁽¹⁾) nach außen um das zweite Teildrahtführungsmittel (3⁽²⁾) herum in einer zweiten Drahtführungsrille (23) in axial um zumindest eine Drahtdicke größeren Entfernung vom Rückschlussring (32), durch eine zweite Drahtdurchführung (8⁽²⁾) der zumindest n Drahtdurchführungen radial nach innen und Wickeln einer ersten Spule (S4) der zweiten Phase,
(g) Durchführung des Wickeldrahtes (6") durch die zweite Drahtdurchführung (8⁽²⁾) radial nach außen, Verlegung um mehrere Drahtführungsmittel (5⁽¹⁾, 5⁽²⁾, 5⁽³⁾) in der zweiten Ebene, Durchführen durch eine fünfte Drahtdurchführung (8⁽⁵⁾) der zumindest n Drahtdurchführungen radial nach innen und Wickeln einer zweiten Spule (S5) der zweiten Phase,
(h) Durchführen des Wickeldrahtes (6") durch die fünfte Drahtdurchführung (8⁽⁵⁾) radial nach außen, Verlegung um mehrere Drahtführungsmittel (5⁽⁴⁾, 5⁽⁵⁾, 5⁽⁶⁾) in der zweiten Ebene, durch eine achte Drahtdurchführung (8⁽⁸⁾) der zumindest n Drahtdurchführungen radial nach innen, Wickeln einer dritten Spule (S6) der zweiten Phase, Durchführung durch die achte Drahtdurchführung (8⁽⁸⁾) radial nach außen, Verlegung um ein drittes Teildrahtführungsmittel (3⁽³⁾) und Vorbeiführung an einem zweiten Drahtablenkmittel (9⁽²⁾) in der zweiten Ebene,
(i) Führen des Wickeldrahtes (6") zu einem dritten Anschlagpfosten (16) des Anschlagmittels (13) in der zweiten Ebene, Anschlagen des Wickeldrahtes (6") daran, Rückführung des Wickeldrahtes (6"') auf gleichem Weg in einer dritten Ebene in Richtung Stator (1), Führen um das zweite Drahtablenkmittel (9⁽²⁾) herum durch eine neunte Drahtdurchführung (8⁽⁹⁾) der zumindest n Drahtdurchführungen und um das erste Drahtumlenkmittel (7⁽¹⁾) herum anschließend durch die erste Freisparung (10⁽¹⁾) nach außen um das zweite Drahtumlenkmittel (7⁽²⁾) herum durch die zweite Freisparung (10⁽²⁾) nach innen, um das dritte Drahtumlenkmittel (7⁽³⁾) herum axial vor der Spule (S1) vorbei um das erste Teildrahtführungsmittel (3⁽¹⁾) herum, durch die erste Zusatzdrahtdurchführung (2⁽¹⁾) nach außen,
(j) Führen des Wickeldrahtes (6''') um das zweite Teildrahtführungsmittel 3⁽²⁾ und das erste Drahtführungsmittel (5⁽¹⁾) in der dritten Ebene durch eine dritte Drahtdurchführung (8⁽³⁾) der zumindest n Drahtdurchführungen radial nach innen, Wickeln einer zweiten Spule (S7) der dritten Phase, Durchführen durch die dritte Drahtdurchführung (8⁽³⁾) nach außen, Verlegung um mehrere Drahtführungsmittel (5⁽²⁾, 5⁽³⁾, 5⁽⁴⁾) in der dritten Ebene in einer dritten Drahtführungsrille (23) und einer sechsten Drahtdurchführung (8⁽⁶⁾) der zumindest n Drahtdurchführungen radial nach innen und Wickeln einer zweiten Spule (S8) der dritten Phase,
(k) Führen des Wickeldrahtes (6"') durch die sechste Drahtdurchführung (8⁽⁶⁾) radial nach außen, Verlegung um mehrere Drahtführungsmittel (5⁽⁵⁾, 5⁽⁶⁾) und Teildrahtführungsmittel (3⁽³⁾, 3⁽⁴⁾) in der dritten Ebene durch die neunte Drahtdurchführung (8⁽⁹⁾) radial nach innen;
(l) Wickeln einer dritten Spule (S9) der dritten Phase, Führen des Wickeldrahtes (6''') durch eine zweite Zusatzdrahtdurchführung (2⁽²⁾) oder einer anderen Drahtdurchführung (8) radial nach außen, Verlegung des Wickeldrahtes (6''') um kein oder zumindest ein Drahtführungsmittel (5) und Verlegung um das vierte Teildrahtführungsmittel (3⁽⁴⁾) und das erste Drahtumlenkmittel (7⁽¹⁾), Durchführung durch die erste Freisparung (10⁽¹⁾) nach innen, Touchieren des zweiten Drahtumlenkmittels (7⁽²⁾) und Umlenkung des Wickeldrahtes (6''') um das dritte Drahtumlenkmittel (7⁽³⁾) in Richtung Anschlagmittel (13) und Anschlagen am ersten Anschlagpfosten (14).
(m) Aufschieben des Anschlussblocks (28) radial in Richtung Stator (1) auf einen mit dem Isolierstoffkörper (4) einstückigen Träger (22), so dass in einer achsparallelen Richtung ein Formschluss hergestellt wird.
(n) Umlenken durch die Drahtumlenkmittel (7) von jeweils mindestens einem Wickeldrahtabschnitt, der zum Anschlussblock (28) führt.

17. Verfahren nach Anspruch 16, **dadurch gekennzeichnet, dass** der Anschlussblock (28) rechtwinklig zur Erstreckungsrichtung der zwischen dem Stator (1) und dem Anschlagmittel (13) verlaufenden Wickeldrahtabschnitte (6', 6", 6''') gefügt wird, so dass diese in Drahtverlegungsschlitzen (24) aufgenommen werden.

18. Verfahren nach Anspruch 16, **dadurch gekennzeichnet, dass** die Wickeldrahtabschnitte (6', 6", 6''') durch Schneid-Klemm-Kontakte (25), Schweiß- oder Lötkontakte elektrisch kontaktiert werden.

19. Verfahren nach Anspruch 18, **dadurch gekennzeichnet, dass** die Wickeldrahtabschnitte (6', 6", 6''') nahe am Anschlussblock (28) durchtrennt werden.

20. Verfahren nach Anspruch 19, **dadurch gekennzeichnet, dass** der Stator (1) und die abgeschnittenen Wickeldrahtabschnitte (6', 6", 6''') aus der Wickelmaschine entnommen werden.

## Claims

1. Electronically commutated DC motor comprising an inner rotor and a three-phase stator (1), **characterised in that** the DC motor is produced in accordance with a method according to claim 16.

2. Electronically commutated DC motor according to claim 1, **characterised in that** at least two of the three adjacent wire deflection means (7⁽¹⁾, 7⁽²⁾) are used solely for wire deflection, and **in that** no winding wire portion leads directly from one of said two wire deflection means (7⁽¹⁾, 7⁽²⁾) to one of the coils (S1 to Sₙ), and **in that** the winding wire (6) is guided past the two wire deflection means (7⁽¹⁾, 7⁽²⁾) at least once radially outwards and once radially inwards.

3. Electronically commutated DC motor according to claim 2, **characterised in that** the winding wire (6) is guided past the third wire deflection means (7⁽³⁾) radially inwards only.

4. Electronically commutated DC motor according to claim 1, 2 or 3, **characterised in that**, in the region of each stator pole (33), the wire guidance means (5) of the insulating-material member (4) have at least one radially oriented wire feed-through (8) capable of receiving the winding wire (6) between a spatial region radially inside the wire guidance means (5) and a spatial region radially outside the wire guidance means (5).

5. Electronically commutated DC motor according to claim 4, **characterised in that** at least the two wire guidance means (5) adjacent to the wire deflection means (7) comprise additional wire feed-throughs (2) and are therefore separated into partial wire guidance means (3).

6. Electronically commutated DC motor according to at least one of the preceding claims, **characterised in that** at least two winding wire portions contact the first, the second and the third wire deflection means (7⁽¹⁾, 7⁽²⁾, 7⁽³⁾) one after the other.

7. Electronically commutated DC motor according to claim 6, **characterised in that** the winding wire portions are connected to one of the phase terminals P1, P2 or P3 over the shortest path.

8. Electronically commutated DC motor according to at least one of the preceding claims, **characterised in that** the wire deflection means (7) do not have any undercuts in the axial direction.

9. Electronically commutated DC motor according to at least one of the preceding claims, **characterised in that** a radial distance from the cutting edges of an insulation displacement contact (25) to the radially outer edge of the yoke ring (32) is at most four times the width of a recess (10).

10. Electronically commutated DC motor according to at least one of the preceding claims, **characterised in that** the depth of the recesses (10) is at least four times the wire thickness plus the thickness of a shoulder (30) between a wire guidance groove (23) on the outer circumference of the wire guidance means (5) and the axial end of the wire guidance means (5).

11. Electronically commutated DC motor according to at least one of the preceding claims, **characterised in that**, outside the coils (S1 to Sₙ) and the terminal block (28), the winding wire (6) is laid in different planes without any contact therebetween.

12. Electronically commutated DC motor according to at least one of the preceding claims, **characterised in that** the wire guidance means (5) and the wire deflection means (7) are distributed around the circumference of the yoke ring cover (19), both the wire feed-throughs (8) and the recesses (10) having a clear width through which a winding needle can pass without difficulty to wind the coils (S1 to Sₙ) and lay the winding wire (6).

13. Electronically commutated DC motor according to at least one of the preceding claims, **characterised in that** the stator (1) has a three-phase winding in the form of a delta configuration having in each case a plurality of coils (S1 to Sₙ) wired in series.

14. Electronically commutated DC motor according to at least one of the preceding claims, **characterised in that** the winding wire (6) is electrically connected multiple times to a terminal block (28) arranged in a segment region (29).

15. Electronically commutated DC motor according to at least one of the preceding claims, **characterised in that** at least one wire diverting means (9) is arranged radially outside the yoke ring (32) between the yoke ring cover (19) and the terminal block (28).

16. Method for winding an electronically commutated DC motor, comprising the following steps:
(a) providing a reusable fastening means (13) as a part of a workpiece support, providing a stator (1) which has a closed yoke ring (32), a plurality of inwardly pointing stator poles (33) formed in one piece with said ring, and an insulating-material member (4), which axially covers the stator poles (33) by means of pole covers (21) and axially covers the yoke ring (32) by means of a yoke ring cover (19), and the insulating-material member (4) has wire guidance means (5) that extend axially parallel and are separated from one another by wire feed-throughs (8), wherein n stator poles (33) are provided and each stator pole (33) can be wound with a coil (S1 to Sₙ), wherein additionally at least three adjacent wire deflection means (7) separated from one another by two recesses (10⁽¹⁾, 10⁽²⁾) project from the yoke ring cover (19) in an axially parallel manner, and at least n wire feed-throughs (8) are provided between the wire guidance means (5) themselves or between the wire guidance means (5) and the wire deflection means (7), wherein the recesses (10⁽¹⁾, 10⁽²⁾) face a terminal block (28), which is to be arranged radially outside the yoke ring cover (19) and in which three insulation displacement contacts (25), welded contacts or soldered contacts are received,
mounting the stator (1) on the fastening means (13), inserting said assembly into a winding device, fastening a winding wire (6') to a first fastening post (14) of the fastening means (13) and guiding the winding wire (6') in a first plane towards the stator (1) through a first wire guide (8⁽¹⁾) of the at least n wire feed-throughs of the insulating-material member (4),
(b) winding a first coil (S1) of a first phase,
(c) laying the winding wire (6') between the first coil (S1) via the first wire feed-through (8⁽¹⁾) radially outwards and via a plurality of partial wire guidance means (3⁽¹⁾, 3⁽²⁾) and wire guidance means (5⁽¹⁾, 5⁽²⁾) in a first wire guidance groove (23) in the first plane positioned axially close to the yoke ring (32), deflecting the winding wire (6') inwards through a fourth wire feed-through (8⁽⁴⁾) of the at least n wire feed-throughs, and winding a second coil (S2) of the first phase,
(d) feeding the winding wire (6') through the fourth wire feed-through (8⁽⁴⁾) radially outwards, laying said wire around a plurality of wire guidance means (5⁽³⁾, 5⁽⁴⁾, 5⁽⁵⁾) in the first plane and then laying it through a seventh wire feed-through (8⁽⁷⁾) of the at least n wire feed-throughs radially inwards, and winding a third coil (S3) of the first phase,
(e) feeding the winding wire (6') through the seventh wire feed-through (8⁽⁷⁾) radially outwards and laying it around the wire guidance means (5⁽⁶⁾) and around the partial wire guidance means (3⁽³⁾, 3⁽⁴⁾) in the first plane and around the first wire deflection means (7⁽¹⁾) through the first recess (10⁽¹⁾), around the second wire deflection means (7⁽²⁾) radially outwards through the second recess (10⁽²⁾) towards the fastening means (13) in the first plane, and fastening said wire to a second fastening post (15),
(f) guiding the winding wire (6") of a second phase from the second fastening post (15) towards the stator (1) in a second plane, deflecting the winding wire (6") around a first wire diverting means (9⁽¹⁾) and the third wire deflection means (7⁽³⁾), and in the process feeding it through the second recess (10⁽²⁾) radially inwards, guiding it past the first partial wire guidance means (3⁽¹⁾) and diverting it therethrough, feeding it through a first additional wire feed-through (2⁽¹⁾) outwards around the second wire partial wire guidance means (3⁽²⁾) in a second wire guidance groove (23) at a distance from the yoke ring (32) that is axially larger by at least one wire thickness, through a second wire feed-through (8⁽²⁾) of the at least n wire feed-throughs radially inwards, and winding a first coil (S4) of the second phase,
(g) feeding the winding wire (6") through the second wire feed-through (8⁽²⁾) radially outwards, laying it around a plurality of wire guidance means (5⁽¹⁾, 5⁽²⁾, 5⁽³⁾) in the second plane, feeding it through a fifth wire feed-through (8⁽⁵⁾) of the at least n wire feed-throughs radially inwards, and winding a second coil (S5) of the second phase,
(h) feeding the winding wire (6") through the fifth wire feed-through (8⁽⁵⁾) radially outwards, laying it around a plurality of wire guidance means (5⁽⁴⁾, 5⁽⁵⁾, 5⁽⁶⁾) in the second plane, through an eighth wire feed-through (8⁽⁸⁾) of the at least n wire feed-throughs radially inwards, winding a third coil (S6) of the second phase, feeding said wire through the eighth wire feed-through (8⁽⁸⁾) radially outwards, laying it around a third partial wire guidance means (3⁽³⁾) and guiding it past a second wire diverting means (9⁽²⁾) in the second plane,
(i) guiding the winding wire (6") towards a third fastening post (16) of the fastening means (13) in the second plane, fastening the winding wire (6") thereto, guiding the winding wire (6") back on the same path in a third plane towards the stator (1), guiding it around the second wire diverting means (9⁽²⁾) through a ninth wire feed-through (8⁽⁹⁾) of the at least n wire feed-throughs and around the first wire deflection means (7⁽¹⁾) and then through the first recess (10⁽¹⁾) radially outwards around the second wire deflection means (7⁽²⁾) through the second recess (10⁽²⁾) inwards, around the third wire deflection means (7⁽³⁾) axially past the front of the coil (S1), around the first partial wire guidance means (3⁽¹⁾), through the first additional wire feed-through (2⁽¹⁾) outwards,
(j) guiding the winding wire (6''') around the second partial wire guidance means (3⁽²⁾) and the first wire guidance means (5⁽¹⁾) in the third plane through a third wire feed-through (8⁽³⁾) of the at least n wire feed-throughs radially inwards, winding a second coil (S7) of the third phase, feeding said wire through the third wire feed-through (8⁽³⁾) outwards, laying it around a plurality of wire guidance means (5⁽²⁾, 5⁽³⁾, 5⁽⁴⁾) in the third plane in a third wire guidance groove (23) and a sixth wire feed-through (8⁽⁶⁾) of the at least n wire feed-throughs radially inwards, and winding a second coil (S8) of the third phase,
(k) guiding the winding wire (6''') through the sixth wire feed-through (8⁽⁶⁾) radially outwards, laying it around a plurality of wire guidance means (5⁽⁵⁾, 5⁽⁶⁾) and partial wire guidance means (3⁽³⁾, 3⁽⁴⁾) in the third plane through the ninth wire feed-through (8⁽⁹⁾) radially inwards,
(l) winding a third coil (S9) of the third phase, guiding the winding wire (6''') through a second additional wire feed-through (2⁽²⁾) or another wire feed-through (8) radially outwards, laying the winding wire (6''') around no wire guidance means (5) or around at least one wire guidance means, and laying it around the fourth partial wire guidance means (3⁽⁴⁾) and the first wire deflection means (7⁽¹⁾), feeding it through the first recess (10⁽¹⁾) inwards, touching the second wire deflection means (7⁽²⁾) and deflecting the winding wire (6''') around the third wire deflection means (7⁽³⁾) towards the fastening means (13), and fastening it to the first fastening post (14),
(m) sliding the terminal block (28) radially towards the stator (1) onto a support (22) formed in one piece with the insulating-material member (4), such as to establish a form fit in an axially parallel direction,
(n) deflecting, by means of the wire deflection means (7), at least one winding wire portion leading to the terminal block (28) in each case.

17. Method according to claim 16, **characterised in that** the terminal block (28) is assembled at right angles to the extension direction of the winding wire portions (6', 6", 6''') extending between the stator (1) and the fastening means (13), such that said portions are received in wire laying slots (24).

18. Method according to claim 16, **characterised in that** the winding wire portions (6', 6", 6''') are electrically contacted by insulation displacement contacts (25), welded contacts or soldered contacts.

19. Method according to claim 18, **characterised in that** the winding wire portions (6', 6", 6''') are severed close to the terminal block (28).

20. Method according to claim 19, **characterised in that** the stator (1) and the cut-off winding wire portions (6', 6", 6''') are removed from the winding machine.

## Revendications

1. Moteur à courant continu à commutation électronique comprenant un rotor intérieur et un stator (1) à trois phases
**caractérisé en ce que** le moteur à courant continu est fabriqué conformément à un procédé selon la revendication 16.

2. Moteur à courant continu à commutation électronique selon la revendication 1, **caractérisé en ce qu'**au moins deux des trois moyens de déviation de fil (7⁽¹⁾, 7⁽²⁾) voisins servent exclusivement à la déviation de fil, et **en ce qu'**aucun tronçon de fil de bobinage ne mène, à partir d'un de ces deux moyens de déviation de fil (7⁽¹⁾, 7⁽²⁾), directement à l'une des bobines (S1 à Sn), et **en ce que** le fil de bobinage (6), au niveau de ces deux moyens de déviation de fil (7⁽¹⁾, 7⁽²⁾), passe au-devant de ceux-ci au moins une fois radialement à l'extérieur et une fois radialement à l'intérieur.

3. Moteur à courant continu à commutation électronique selon la revendication 2, **caractérisé en ce que** le fil de bobinage (6) ne passe que radialement à l'intérieur au-devant du troisième moyen de déviation de fil (7⁽³⁾).

4. Moteur à courant continu à commutation électronique selon la revendication 1, 2 ou la revendication 3, **caractérisé en ce que** les moyens de guidage de fil (5) du corps de matériau isolant (4) présentent au niveau de chaque pôle de stator (33), au moins un passage de guidage de fil (8) d'orientation radiale, qui est adapté à recevoir le fil de bobinage (6) entre une zone spatiale radialement à l'intérieur du moyen de guidage de fil (5) et une zone spatiale radialement à l'extérieur du moyen de guidage de fil (5).

5. Moteur à courant continu à commutation électronique selon la revendication 4, **caractérisé en ce qu'**au moins les deux moyens de guidage de fil (5) voisins des moyens de déviation de fil (7), présentent des passages de guidage de fil additionnels (2) en étant ainsi subdivisés en moyens de guidage de fil partiels (3).

6. Moteur à courant continu à commutation électronique selon l'une au moins des revendications précédentes, **caractérisé en ce qu'**au moins deux tronçons de fil de bobinage touchent le premier, le deuxième et le troisième moyen de déviation de fil (7⁽¹⁾, 7⁽²⁾, 7⁽³⁾) successivement.

7. Moteur à courant continu à commutation électronique selon la revendication 6, **caractérisé en ce que** les tronçons de fil de bobinage sont reliés par le plus court chemin à l'un des raccords de branchement de phase P1, P2 ou P3.

8. Moteur à courant continu à commutation électronique selon l'une au moins des revendications précédentes, **caractérisé en ce que** les moyens de déviation de fil (7) ne présentent pas de contre-dépouilles dans la direction axiale.

9. Moteur à courant continu à commutation électronique selon l'une au moins des revendications précédentes, **caractérisé en ce qu'**une distance radiale d'arêtes de coupe d'un contact de connexion auto-dénudant (25) à un bord radialement extérieur de l'anneau de retour de fermeture magnétique (32), correspond au maximum à quatre fois la largeur d'un dégagement (10).

10. Moteur à courant continu à commutation électronique selon l'une au moins des revendications précédentes, **caractérisé en ce que** la profondeur des dégagements (10) vaut au moins quatre fois l'épaisseur de fil et en supplément l'épaisseur d'un décrochement (30) entre une gorge de guidage de fil (23) à la périphérie extérieure des moyens de guidage de fil (5) et l'extrémité axiale du moyen de guidage de fil (5).

11. Moteur à courant continu à commutation électronique selon l'une au moins des revendications précédentes, **caractérisé en ce que** le fil de bobinage (6) est posé, à l'extérieur des bobines (S1 à Sn) et du bloc de raccordement (28), sans contact réciproque, dans des plans différents.

12. Moteur à courant continu à commutation électronique selon l'une au moins des revendications précédentes, **caractérisé en ce que** les moyens de guidage de fil (5) et les moyens de déviation de fil (7) sont répartis le long de la périphérie de la couverture d'anneau de retour de fermeture magnétique (19), aussi bien les passages de guidage de fil (8) que les dégagements (10) présentant une largeur d'ouverture, qui permet le passage sans problème d'une aiguille de bobinage pour assurer le bobinage des bobines (S1 à Sn) et la pose du fil de bobinage (6).

13. Moteur à courant continu à commutation électronique selon l'une au moins des revendications précédentes, **caractérisé en ce que** le stator (1) présente un enroulement à trois phases, qui est réalisé en tant que montage triangle avec respectivement plusieurs bobines (S1 à Sn) montées en série.

14. Moteur à courant continu à commutation électronique selon l'une au moins des revendications précédentes, **caractérisé en ce que** le fil de bobinage (6) est raccordé électriquement à plusieurs reprises dans un bloc de raccordement (28), qui est agencé dans la zone d'un secteur (29).

15. Moteur à courant continu à commutation électronique selon l'une au moins des revendications précédentes, **caractérisé en ce qu'**entre la couverture d'anneau de retour de fermeture magnétique (19) et le bloc de raccordement (28), radialement à l'extérieur de l'anneau de retour de fermeture magnétique (32), est agencé au moins un moyen de détournement de fil (9).

16. Procédé pour assurer le bobinage d'un moteur à courant continu à commutation électronique, qui comprend les étapes de procédé suivantes :
(a) fourniture d'un moyen d'accrochage (13) réutilisable en tant que partie constitutive d'un porte-pièce, fourniture d'un stator (1), qui comporte un anneau de retour de fermeture magnétique (32) fermé, une pluralité de pôles de stator (33) d'un seul tenant avec le précédent et dirigés vers l'intérieur, et un corps de matériau isolant (4), qui couvre axialement les pôles de stator (33) par des couvertures de pôle (21) et l'anneau de retour de fermeture magnétique (32) par une couverture d'anneau de retour de fermeture magnétique (19), le corps de matériau isolant (4) présentant des moyens de guidage de fil (5), qui s'étendent parallèlement à l'axe et sont séparés mutuellement par des passages de guidage de fil (8), stator dans lequel sont prévus n pôles de stator (33) et chaque pôle de stator (33) peut être bobiné avec une bobine (S₁ à Sₙ), dans lequel au moins trois moyens de déviation de fil (7) mutuellement voisins font en plus saillie parallèlement à l'axe de la couverture d'anneau de retour de fermeture magnétique (19) et sont séparés mutuellement par deux dégagements (10⁽¹⁾, 10⁽²⁾), et dans lequel sont prévus au moins n passages de guidage de fil (8) entre les moyens de guidage de fil (5) entre eux ou entre les moyens de guidage de fil (5) et les moyens de déviation de fil (7), et dans lequel les dégagements (10⁽¹⁾, 10⁽²⁾) sont en regard d'un bloc de raccordement (28), qui est à agencer radialement à l'extérieur de la couverture d'anneau de retour de fermeture magnétique (19) et dans lequel sont logés trois contacts de connexion auto-dénudants (25), des contacts à souder ou à braser, l'étape de procédé comprenant en outre le montage du stator (1) sur le moyen d'accrochage (13), le placement de cet agencement dans un dispositif de bobinage, l'accrochage d'un fil de bobinage (6') sur un premier plot d'accrochage (14) du moyen d'accrochage (13), et le guidage du fil de bobinage (6') dans un premier plan vers le stator (1) à travers un premier passage de guidage de fil (8⁽¹⁾) desdits au moins n passages de guidage fil du corps de matériau isolant (4),
(b) bobinage d'une première bobine (S1) d'une première phase,
(c) pose du fil de bobinage (6') entre la première bobine (S1) par l'intermédiaire du premier passage de guidage de fil (8⁽¹⁾), radialement vers l'extérieur et par l'intermédiaire de plusieurs moyens de guidage de fil partiels (3⁽¹⁾, 3⁽²⁾) et moyens de guidage de fil (5⁽¹⁾, 5⁽²⁾) dans une première gorge de guidage de fil (23) dans le premier plan axialement proche de l'anneau de retour de fermeture magnétique (32), déviation du fil de bobinage (6') vers l'intérieur à travers un quatrième passage de guidage de fil (8⁽⁴⁾) desdits au moins n passages de guidage de fil, et bobinage d'une deuxième bobine (S2) de la première phase,
(d) passage du fil de bobinage (6') à travers le quatrième passage de guidage de fil (8⁽⁴⁾), radialement vers l'extérieur, pose autour de plusieurs moyens de guidage de fil (5⁽³⁾, 5⁽⁴⁾, 5⁽⁵⁾) dans le premier plan, et poursuite de la pose à travers un septième passage de guidage de fil (8⁽⁷⁾) desdits au moins n passages de guidage de fil radialement vers l'intérieur, et bobinage d'une troisième bobine (S3) de la première phase,
(e) passage du fil de bobinage (6') à travers le septième passage de guidage de fil (8⁽⁷⁾) radialement vers l'extérieur, et pose autour du moyen de guidage de fil (5⁽⁶⁾) et autour des moyens de guidage de fil partiels (3⁽³⁾, 3⁽⁴⁾) dans le premier plan, et autour du premier moyen de déviation de fil (7⁽¹⁾), à travers le premier dégagement (10⁽¹⁾), autour du deuxième moyen de déviation de fil (7⁽²⁾) radialement vers l'extérieur, à travers le deuxième dégagement (10⁽²⁾) en direction du moyen d'accrochage (13) dans le premier plan, et accrochage à un deuxième plot d'accrochage (15),
(f) guidage du fil de bobinage (6") d'une deuxième phase du deuxième plot d'accrochage (15) en direction du stator (1) dans un premier plan, déviation du fil de bobinage (6") autour d'un premier moyen de détournement de fil (9⁽¹⁾) et le troisième moyen de déviation de fil (7⁽³⁾) et à cette occasion passage à travers le deuxième dégagement (10⁽²⁾) radialement vers l'intérieur, passage au-devant du premier moyen de guidage de fil partiel (3⁽¹⁾) et détournement par celui-ci, passage à travers un premier passage de guidage de fil additionnel (2⁽¹⁾) vers l'extérieur autour du deuxième moyen de guidage de fil partiel (3⁽²⁾) dans une deuxième gorge de guidage (23) à une distance axiale plus grande d'au moins une épaisseur de fil de l'anneau de retour de fermeture magnétique (32), à travers un deuxième passage de guidage de fil (8⁽²⁾) desdits au moins n passages de guidage de fil, radialement vers l'intérieur, et bobinage d'une première bobine (S4) de la deuxième phase,
(g) passage du fil de bobinage (6") à travers le deuxième passage de guidage de fil (8⁽²⁾) radialement vers l'extérieur, pose autour de plusieurs moyens de guidage de fil (5⁽¹⁾, 5⁽²⁾, 5⁽³⁾) dans le deuxième plan, passage à travers un cinquième passage de guidage de fil (8⁽⁵⁾) desdits au moins n passages de guidage de fil, radialement vers l'intérieur, et bobinage d'une deuxième bobine (S5) de la deuxième phase,
(h) passage du fil de bobinage (6") à travers le cinquième passage de guidage de fil (8⁽⁵⁾) radialement vers l'extérieur, pose autour de plusieurs moyens de guidage de fil (5⁽⁴⁾, 5⁽⁵⁾, 5⁽⁶⁾) dans le deuxième plan, à travers un huitième passage de guidage de fil (8⁽⁸⁾) desdits au moins n passages de guidage de fil radialement vers l'intérieur, bobinage d'une troisième bobine (S6) de la deuxième phase, passage à travers le huitième passage de guidage de fil (8⁽⁸⁾) radialement vers l'extérieur, pose autour d'un troisième moyen de guidage de fil partiel (3⁽³⁾) et passage au-devant d'un deuxième moyen de détournement de fil (9⁽²⁾) dans le deuxième plan,
(i) guidage du fil de bobinage (6") vers un troisième plot d'accrochage (16) du moyen d'accrochage (13) dans le deuxième plan, accrochage du fil de bobinage (6") à celui-ci, retour du fil de bobinage (6''') selon le même chemin dans un troisième plan en direction du stator (1), guidage autour du deuxième moyen de détournement de fil (9⁽²⁾) à travers un neuvième passage de guidage de fil (8⁽⁹⁾) desdits au moins n passages de guidage de fil, et autour du premier moyen de déviation de fil (7⁽¹⁾), ensuite à travers le premier dégagement (10⁽¹⁾) vers l'extérieur autour du deuxième moyen de déviation de fil (7⁽²⁾), à travers le deuxième dégagement (10⁽²⁾) vers l'intérieur, autour du troisième moyen de déviation de fil (7⁽³⁾) axialement au-devant de la première bobine (S1) autour du premier moyen de guidage de fil partiel (3⁽¹⁾), à travers le premier passage de guidage de fil additionnel (2⁽¹⁾) vers l'extérieur,
(j) guidage du fil de bobinage (6''') autour du deuxième moyen de guidage de fil partiel (3⁽²⁾) et le premier moyen de guidage de fil (5⁽¹⁾) dans le troisième plan à travers un troisième passage de guidage de fil (8⁽³⁾) desdits au moins n passages de guidage de fil radialement vers l'intérieur, bobinage d'une première bobine (S7) de la troisième phase, passage à travers le troisième passage de guidage de fil (8⁽³⁾) vers l'extérieur, pose autour de plusieurs moyens de guidage de fil (5⁽²⁾, 5⁽³⁾, 5⁽⁴⁾) dans le troisième plan dans une troisième gorge de guidage de fil (23), dans un sixième passage de guidage de fil (8⁽⁶⁾) desdits au moins n passages de guidage de fil, radialement vers l'intérieur, et bobinage d'une deuxième bobine (S8) de la troisième phase,
(k) guidage du fil de bobinage (6''') à travers le sixième passage de guidage de fil (8⁽⁶⁾) radialement vers l'extérieur, pose autour de plusieurs moyens de guidage de fil (5⁽⁵⁾, 5⁽⁶⁾) et des moyens de guidage de fil partiels (3⁽³⁾, 3⁽⁴⁾) dans le troisième plan, à travers le neuvième passage de guidage de fil (8⁽⁹⁾) radialement vers l'intérieur,
(l) bobinage d'une troisième bobine (S9) de la troisième phase, guidage du fil de bobinage (6''') à travers un deuxième passage de guidage de fil additionnel (2⁽²⁾) ou un autre passage de guidage de fil (8) radialement vers l'extérieur, pose du fil de bobinage (6''') autour d'aucun ou d'au moins un moyen de guidage de fil (5), et pose autour du quatrième moyen de guidage de fil partiel (3⁽⁴⁾) et le premier moyen de déviation de fil (7⁽¹⁾), passage à travers le premier dégagement (10⁽¹⁾) vers l'intérieur, effleurement du deuxième moyen de déviation de fil (7⁽²⁾) et déviation du fil de bobinage (6''') autour du troisième moyen de déviation de fil (7⁽³⁾) en direction du moyen d'accrochage (13), et accrochage au premier plot d'accrochage (14),
(m) engagement du bloc de raccordement (28) radialement en direction du stator (1) sur un support (22) d'un seul tenant avec le corps de matériau isolant (4), de manière à établir dans une direction parallèle à l'axe, une liaison par complémentarité de formes,
(n) déviation par les moyens de déviation de fil (7) respectivement d'au moins un tronçon de fil de bobinage, qui conduit au bloc de raccordement (28).

17. Procédé selon la revendication 16, **caractérisé en ce que** le bloc de raccordement (28) est assemblé perpendiculairement à la direction d'étendue des tronçons de fil de bobinage (6', 6", 6''') s'étendant entre le stator (1) et le moyen d'accrochage (13), de sorte que ces tronçons de fil de bobinage se logent dans des fentes de pose de fil (24).

18. Procédé selon la revendication 16, **caractérisé en ce que** les tronçons de fil de bobinage (6', 6", 6''') sont contactés électriquement par des contacts de connexion auto-dénudants (25) ou des contacts de connexion à souder ou braser.

19. Procédé selon la revendication 18, **caractérisé en ce que** les tronçons de fil de bobinage (6', 6", 6''') sont sectionnés à proximité du bloc de raccordement (28).

20. Procédé selon la revendication 19, **caractérisé en ce que** le stator (1) et les tronçons de fil de bobinage (6', 6", 6''') sectionnés sont prélevés hors de la machine de bobinage.
